# FASCICULE DE BREVET EUROPEEN

(11) **EP 2 399 185 B1**
(45) Date de publication et mention de la délivrance du brevet: **19.12.2012**
(21) Numéro de dépôt: 10707103.7
(22) Date de dépôt: 17.02.2010
(51) Int. Cl.: G06F 3/047

(54) **CAPTEUR MULTIPOINTS**
MEHRPUNKTSENSOR
MULTIPOINT SENSOR

(30) Priorité: 17.02.2009 FR 0900715
(43) Date de publication de la demande: 28.12.2011
(73) Titulaire: Stantum, 33300 Bordeaux (FR)
(72) Inventeur: JOGUET, Pascal, F-33670 Sadirac (FR); OLIVIER, Julien, F-33000 Bordeaux (FR)
(74) Mandataire: Stankoff, Hélène
(86) Numéro de dépôt international: PCT/FR2010/000135
(87) Numéro de publication internationale: WO 2010/094858

(56) Documents cités:
- FR-A- 2 914 756
- GB-A- 2 233 499
- US-A1- 2004 265 602

## Description

L'invention se rapporte à un capteur multipoints.

Un tel capteur est décrit par exemple dans la demande EP 1719047 qui enseigne un capteur multipoints comprenant :
- une couche supérieure constituée de pistes conductrices organisées en lignes ;
- une couche inférieure constituée de pistes conductrices organisées en colonnes ;
- des entretoises d'espacement positionnées entre la couche supérieure et la couche inférieure de sorte à isoler la couche supérieure de la couche inférieure.

Un tel capteur peut permettre notamment la détection de plusieurs zones d'activation à la fois grâce à un balayage séquentiel des lignes et des colonnes conductrices comme décrit dans la demande EP 1719047 précitée.

Lorsqu'un utilisateur appuie sur un tel capteur, la couche supérieure vient au contact de la couche inférieure dans les parties situées entre les entretoises d'espacement. Puisque la couche supérieure et la couche inférieure sont conductrices, ce contact permet de localiser la position des points de contact.

La couche supérieure est par exemple constituée de lignes d'ITO ( oxyde indium étain), qui est un matériau conducteur translucide. Cette couche est positionnée par exemple sous une couche de PET (polyéthylène téréphtalate).

La couche inférieure est par exemple constituée de colonnes d'ITO ( oxyde indium étain), positionnée par exemple au-dessus d'une couche de verre.

Lorsque l'utilisateur appuie sur le capteur, les lignes d'ITO entrent directement en contact avec les colonnes d'ITO entre les entretoises d'espacement.

Or, l'ITO ayant une résistance linéaire non négligeable le long des lignes et des colonnes, mais cependant une résistance verticale beaucoup plus faible aux endroits de contact entre les deux couches ; lorsque plusieurs points de contact sont activés, et notamment de manière orthogonale sur les lignes et les colonnes, les caractéristiques électriques apparaissant à l'intersection d'une ligne et d'une colonne sont perturbées par les autres points de contact situés sur ces mêmes lignes et colonnes.

Par exemple, lorsque l'utilisateur appuie avec trois doigts placés de manière orthogonale sur la couche supérieure, la transmission du signal entre les lignes, les colonnes et les points de contact donnent approximativement les mêmes mesures que si un quatrième doigt été posé dans cette même orthogonalité. De même, des problèmes de masquage peuvent gêner la détection satisfaisante de la position des doigts. Enfin, cette particularité rend difficile voir impossible la détection exacte des zones de contact, puisque les orthogonalités tendent à limiter la détection à des zones rectangulaires, même en cas de zones de contact présentant des diagonales.

Dans l'état de la technique, ces problèmes peuvent être résolus grâce à un traitement électronique et à différents algorithmes de correction.

L'état de la technique comprend par ailleurs un capteur tel que décrit dans la demande FR2914756. Dans ce capteur, une couche intermédiaire équivalant à un ensemble de diode est insérée entre les couches inférieures et supérieures.

Un but de l'invention est de diminuer les problèmes de masquage et d'orthogonalité entre les points de contact sur le capteur sans nécessairement utiliser un traitement électronique.

Ce problème est résolu selon l'invention par un capteur multipoints tel que décrit précédemment, comprenant en outre au moins une couche intermédiaire résistive positionné entre les entretoises d'espacement d'une part et au moins une couche parmi la couche supérieure conductrice et la couche inférieure conductrice d'autre part.

Grâce à cette couche supplémentaire résistive, lorsqu'un utilisateur appuie sur le capteur, la couche supérieure conductrice n'est pas directement en contact avec la couche inférieure conductrice. La présence de ce matériau résistif entre les deux couches conductrices permet alors de diminuer les problèmes d'orthogonalité et de masquage. En utilisation, notamment lorsqu'une pression est exercée sur la couche supérieure conductrice, entre les entretoises d'espacement, la couche supérieure conductrice est en contact avec la couche intermédiaire résistive, qui est elle-même en contact la couche inférieure conductrice. Une détection d'un ou de plusieurs points de contact est alors possible.

Au moins l'une des couches supérieure ou inférieure est de préférence transparente et, selon un mode préféré, le capteur multipoint est formé de couches transparentes, de sorte à être transparent.

De préférence, la couche de matériau résistif est agencée de sorte à obtenir une résistance verticale assez élevée entre les couches conductrices inférieures et supérieures, tout en gardant une quantité de signal satisfaisante.

En particulier, la couche inférieure a une résistance linéaire, la couche supérieure a une résistance linéaire, et la résistance verticale de la couche intermédiaire est supérieure à la résistance linéaire de la couche inférieure et à la résistance linéaire de la couche supérieure.

De préférence, la résistance verticale de la couche intermédiaire est au moins cent fois supérieure à la résistance linéaire de la couche inférieure et de la couche supérieure.

Par exemple, la résistance verticale, c'est-à-dire dans une direction perpendiculaire au plan de la couche supérieure et de la couche inférieure et sur la section correspondant à l'intersection d'une ligne et d'une colonne, a une valeur allant de 50 kiloOhms à 200 kiloOhms.

Cette gamme de valeurs est notamment préférée lorsque les lignes de la couche supérieure et les colonnes de la couche inférieure forment une matrice de cellule carrée, par exemple de côté 1,5 millimètres, et que la résistance linéaire de l'ITO rapportée à la largeur des pistes conductrices et entre 100 à 500 Ohms.

La couche intermédiaire présente avantageusement une impédance très supérieure à l'impédance du matériau conducteur des couches supérieures et inférieures.

La couche intermédiaire est de préférence transparente et est par exemple en silicone.

D'autres caractéristiques avantageuses de l'invention sont décrites ci-après en référence aux figures annexées dans lesquelles :
- FIG. 1 représente une vue en coupe d'un capteur multipoints selon un premier mode de réalisation de l'invention ;
- FIG. 2 représente une vue en coupe d'un capteur multipoints selon un deuxième mode de réalisation de l'invention ;
- FIG. 3 est une représentation éclatée d'un capteur multipoints selon l'invention.

Sur les figures, des références numériques identiques se rapportent à des éléments techniques similaires.

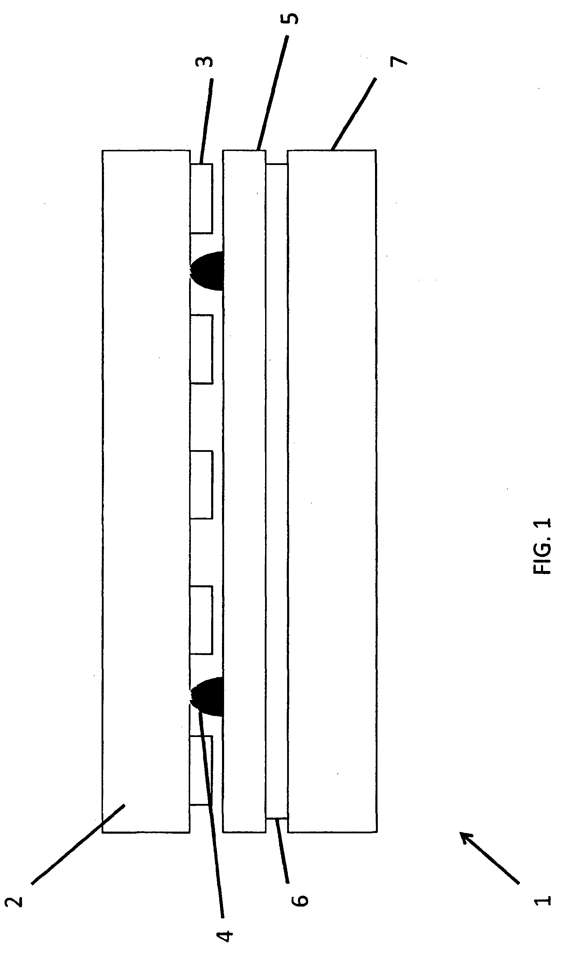

On a représenté sur la FIG. 1, un capteur multipoints 1 selon l'invention.

De préférence, ce capteur multipoints 1 est un capteur multipoints transparent de sorte que les différents couches constituant ce capteur sont transparentes.

Dans ce qui suit, on décrira un capteur 1 transparent mais il est entendu que l'invention est également applicable à un capteur 1 non transparent comprenant donc au moins une couche non transparente.

Sur la FIG. 1, le capteur 1 comprend, dans sa partie supérieure, une couche de PET (polyéthylène téréphtalate) 2. Sous cette couche de PET 2, se trouve une couche supérieure 3 d'ITO (oxyde indium étain), qui est un matériau conducteur translucide. La couche 3 d'ITO forme une structuration de la couche 2 de PET et correspond à des lignes du capteur 1.

Le capteur 1 comprend en outre dans sa partie inférieure, une couche de verre 7. Au-dessus de cette couche, se trouve une couche inférieure 6 d'ITO. La couche 6 d'ITO forme une structuration de la couche 7 de verre et correspond à des colonnes du capteur 1.

Il est entendu que les notions de lignes et de colonnes sont des notions relatives et peuvent être interchangées selon l'orientation du capteur. Par convention uniquement, on considérera que la couche supérieure d'ITO 3 forme les lignes d'un capteur matriciel, mais il est clair pour l'homme du métier qu'elle pourrait également en former les colonnes. Dans ce cas, la couche inférieure d'ITO 6 formerait les lignes de ce capteur matriciel. Dans les deux cas, la direction des pistes d'ITO formant la couche supérieure est perpendiculaire à la direction

Selon le mode de réalisation illustré FIG. 1, on a positionné au-dessus de la couche inférieure 6 d'ITO une couche intermédiaire 5. Au-dessus de cette couche intermédiaire 5, se trouvent des entretoises d'espacement 4 agencées de sorte que, lorsqu'aucune pression n'est exercée sur la couche supérieure de PET 2, la couche d'ITO 3 n'est pas en contact avec la couche intermédiaire 5.

Lorsqu'aucune pression n'est exercée sur le capteur 1, la couche supérieure 3 d'ITO est donc isolée de la couche inférieure 6 d'ITO grâce aux entretoises d'espacement 4.

Les couches d'ITO, de PET et de verre sont transparentes, de sorte que le capteur est dans ce cas transparent.

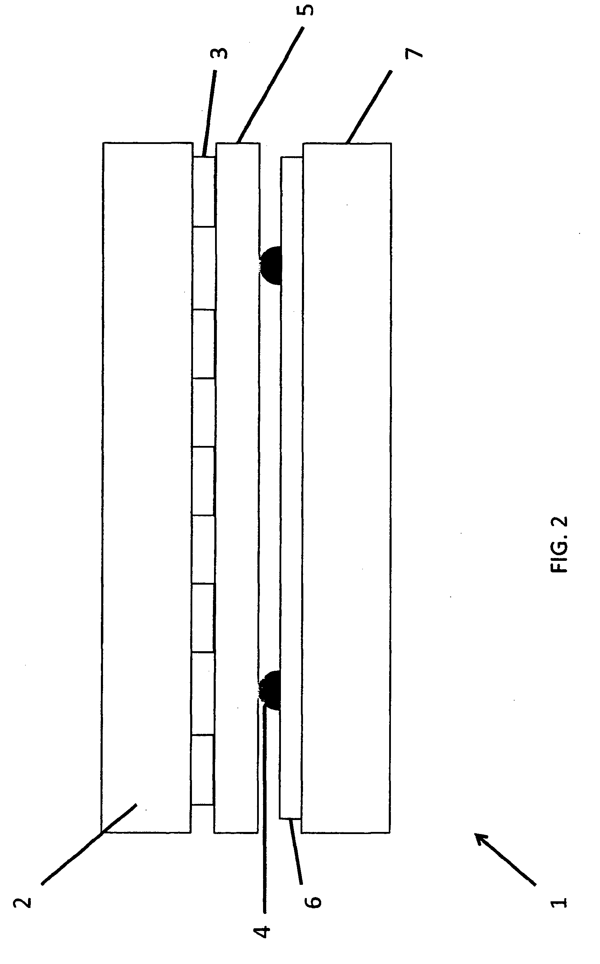

La FIG. 2 représente un autre mode de réalisation de l'invention dans lequel, au lieu d'être positionnée entre la couche inférieure d'ITO 6 et les entretoises d'espacement 4, la couche intermédiaire 5 est positionnée entre la couche supérieure d'ITO 3 et les entretoises d'espacement 4.

Les modes de réalisation des FIG. 1 et 2 peuvent éventuellement être combinées selon l'invention. Dans ce cas, deux couches intermédiaires telles que la couche intermédiaire 5 distinctes peuvent être utilisées. La première couche intermédiaire peut alors être positionnée entre la couche supérieure d'ITO 3 et les entretoises d'espacement 4 comme sur la FIG. 2, et la deuxième couche intermédiaire peut être positionnée entre la couche inférieure d'ITO 6 et les entretoises d'espacement 4.

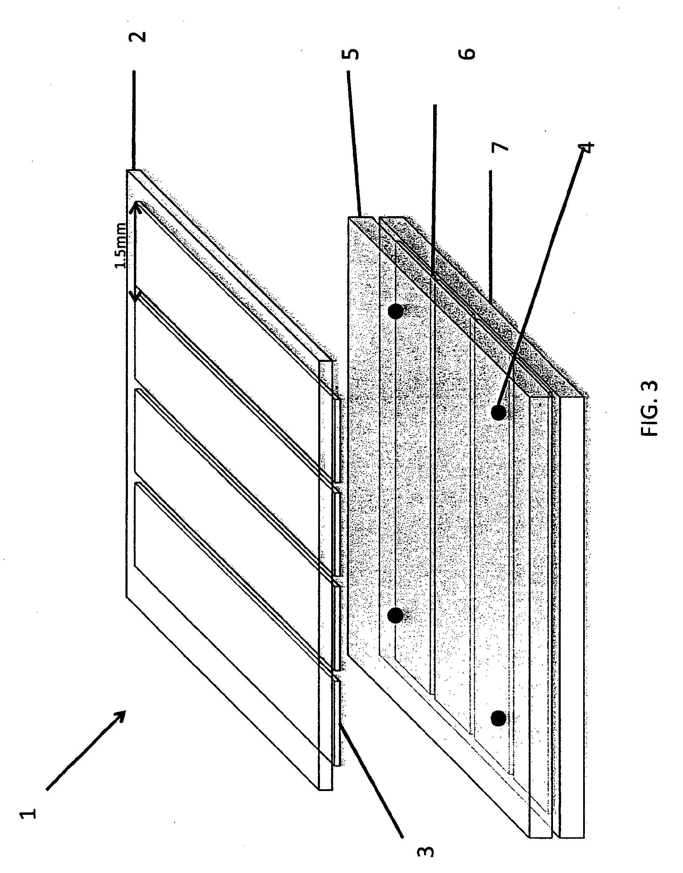

La FIG. 3 représente une vue en perspective du mode de réalisation de la FIG. 1 dans une représentation éclatée. Sur cette figure 3, on a donc représenté la couche supérieure 2 de PET, les lignes supérieures 3 d'ITO, les entretoises d'espacement 4, la couche intermédiaire 5, les colonnes inférieures 6 d'ITO, et la couche inférieure 7 de verre.

Les lignes supérieures d'ITO 3 peuvent avoir une largeur de 1,5 millimètres. De la même façon, les colonnes inférieures d'ITO peuvent avoir une largeur de 1,5 millimètres. Les lignes d'ITO 3 et les colonnes d'ITO 6 forment alors une matrice de cellules carrées de côté 1,5 millimètres.

Le capteur multipoints 1 décrit ci-dessus est destiné à être positionné au-dessus d'un écran permettant d'afficher différents objets, de sorte que les différents couches susmentionnés sont de préférence transparentes.

L'ITO a notamment l'avantage d'être un matériau conducteur et transparent.

On décrit maintenant plus en détail la couche intermédiaire 5 telle qu'elle est utilisée dans les modes de réalisation des figures 1 à 3 décrites ci-dessus.

La couche intermédiaire 5 est transparente avec une faible conductivité électrique. Elle forme une couche continue non structurée. Un coefficient de transparence maximum est recherché afin de ne pas affecter les performances optiques du capteur.

La couche intermédiaire 5 a une très faible conductivité.

De préférence, elle a une résistance verticale, c'est-à-dire dans une direction perpendiculaire au plan de la couche supérieure d'ITO 3 et de la couche inférieure d'ITO 6, comprise entre 50 kiloOhms à 200 kiloOhms dans la cellule carrée de côté 1,5 millimètres décrite ci-dessus.

La valeur de résistance verticale est choisie de sorte à être au moins cent fois supérieure à la résistance linéaire des couches d'ITO, ce qui permet d'éviter les problèmes de masquage de points lors de l'utilisation du capteur de façon satisfaisante.

La valeur de résistance verticale est en outre choisie de sorte à maintenir un niveau de signal satisfaisant en utilisation, c'est-à-dire lorsque la couche supérieure d'ITO 3 est en contact avec la couche intermédiaire résistive 5, qui est elle-même en contact la couche inférieure d'ITO 6.

La Demanderesse a déterminé, à partir de tests, que la gamme de 50 kiloOhms à 200 kiloOhms dans la cellule carrée de côté 1,5 millimètres décrite ci-dessus permet un bon compromis entre le niveau de signal et l'amélioration des problèmes de masquage.

La couche intermédiaire 5 est par exemple réalisée en un matériau semi-conducteur, notamment en silicone . L'épaisseur de la couche est alors par exemple de l'ordre de 300 micromètres, pour une résistivité 640 Ohm.m.

Dans ce cas, pour une cellule carrée de 1,5 millimètre telle que décrite précédemment, la résistance verticale de la couche de silicone est de 85,4 kiloOhms. Cette valeur est alors bien comprise dans la gamme précitée.

En utilisation, un utilisateur appuie sur la couche supérieure de PET 2, le cas échéant avec plusieurs doigts en même temps, ce qui a pour effet que, dans les deux modes de réalisation précédemment décrits, la couche supérieure d'ITO 3 est en contact avec la couche intermédiaire 5, qui est elle-même en contact avec la couche inférieure d'ITO 6. Une détection du contact du doigt ou des doigts de l'utilisateur est alors possible.

De préférence, un balayage séquentiel de la matrice formée par les lignes et les colonnes d'ITO peut être réalisés. Ce balayage est par exemple tel que décrit dans la demande EP 1719047.

## Revendications

1. Capteur multipoints (1) comprenant :
- une couche supérieure (3) constituée de pistes conductrices organisée en lignes ;
- une couche inférieure (6) constituée de pistes conductrices organisée en colonnes ;
- des entretoises d'espacement (4) positionnées entre la couche supérieure et la couche inférieure de sorte à isoler la couche supérieure (3) et la couche inférieure (6) ;
le capteur comprenant en outre au moins une couche intermédiaire (5) positionnée entre les entretoises d'espacement d'une part et au moins une couche parmi la couche supérieure conductrice et la couche inférieure conductrice d'autre part ; la couche inférieure (6) ayant une résistance linéaire, et la couche supérieure (3) ayant une résistance linéaire, **caractérisé en ce que** la couche intermédiaire (5) est une couche résistive et a une résistance verticale et la résistance verticale de la couche intermédiaire (5) est supérieure à la résistance linéaire de la couche inférieure (6) et à la résistance linéaire de la couche supérieure (3).

2. Capteur multipoint selon la revendication 1 dans lequel au moins l'une des couches supérieure ou inférieure est transparente.

3. Capteur multipoint selon la revendication 2 dans lequel le capteur multipoint est formé de couches transparentes, de sorte à être transparent.

4. Capteur multipoints selon l'une des revendications précédentes dans lequel la résistance verticale de la couche de la couche intermédiaire (5) est cent fois supérieure à la résistance verticale de la couche inférieure et de la couche supérieure.

5. Capteur multipoints selon l'une des revendications précédentes dans lequel les lignes de la couche supérieure conductrice (3) et les colonnes de la couche inférieure conductrice (6) forment une matrice de cellules carrées.

6. Capteur multipoints selon la revendication précédente dans lequel les cellules carrées ont un côté de 1,5 millimètres.

7. Capteur multipoints selon l'une des revendications précédentes dans lequel la résistance verticale de la couche intermédiaire (5) a une valeur allant de 50 kiloOhms à 200 kiloOhms.

8. Capteur multipoints selon l'une des revendications précédentes dans lequel la couche intermédiaire (5) est en silicone.

9. Capteur multipoints selon l'une des revendications précédentes dans lequel la couche supérieure conductrice est constituée de lignes d'oxyde indium étain ITO.

10. Capteur multipoints selon l'une des revendications précédentes dans lequel la couche inférieure conductrice est constituée de colonnes d'oxyde indium étain ITO.

11. Capteur multipoints selon l'une des revendications précédentes dans lequel la couche supérieure conductrice est située en dessous d'une couche (2) de polyéthylène téréphtalate PET.

12. Capteur multipoints selon l'une des revendications précédentes dans lequel la couche inférieure conductrice est située au-dessus d'une couche de verre (7).

13. Capteur multipoints selon l'une des revendications précédentes dans lequel la couche intermédiaire est transparente.

14. Capteur multipoints selon l'une des revendications précédentes dans lequel la couche intermédiaire présente une impédance très supérieure à l'impédance du matériau conducteur des couches supérieures et inférieures.

## Claims

1. A multipoint sensor (1) comprising:
- an upper layer (3) constituted by conductive tracks organized in rows;
- a lower layer (6) constituted by conductive tracks organized in columns;
- spacers (4) positioned between the upper layer and the lower layer so as to insulate the upper layer (3) and the lower layer (6);
the sensor further comprising at least one intermediate layer (5) positioned between the spacers and at least one of the conductive upper layer and the conductive lower layer; the lower layer (6) having a linear resistance, and the upper layer (3) having a linear resistance, **characterized in that** the intermediate layer (5) is a resistive layer and has a vertical resistance and the vertical resistance of the intermediate layer (5) is greater than the linear resistance of the lower layer (6) and the linear resistance of the upper layer (3).

2. A multipoint sensor according to claim 1 in which at least one of the upper or lower layers is transparent.

3. A multipoint sensor according to claim 2 in which the multipoint sensor is formed of transparent layers, so as to be transparent.

4. A multipoint sensor according to one of the preceding claims in which the vertical resistance of the intermediate layer (5) is a hundred times greater than the vertical resistance of the lower layer and of the upper layer.

5. A multipoint sensor according to one of the preceding claims in which the rows of the conductive upper layer (3) and the columns of the conductive lower layer (6) form a matrix of square cells.

6. A multipoint sensor according to the preceding claim in which the square cells have sides of 1.5 millimeters.

7. A multipoint sensor according to one of the preceding claims in which the vertical resistance of the intermediate layer (5) has a value ranging from 50 kiloOhms to 200 kiloOhms.

8. A multipoint sensor according to one of the preceding claims in which the intermediate layer (5) is of silicone.

9. A multipoint sensor according to one of the preceding claims in which the conductive upper layer is constituted by rows of indium tin oxide ITO.

10. A multipoint sensor according to one of the preceding claims in which the conductive lower layer is constituted by columns of indium tin oxide ITO.

11. A multipoint sensor according to one of the preceding claims in which the conductive upper layer is situated under a layer (2) of polyethylene terephthalate PET.

12. A multipoint sensor according to one of the preceding claims in which the conductive lower layer is situated above a layer of glass (7).

13. A multipoint sensor according to one of the preceding claims in which the intermediate layer is transparent.

14. A multipoint sensor according to one of the preceding claims in which the intermediate layer has a much higher impedance than the impedance of the conductive material of the upper and lower layers.

## Patentansprüche

1. Mehrpunktsensor (1), enthaltend:
- eine obere Schicht (3), die aus zeilenweise angeordneten Leiterbahnen besteht;
- eine untere Schicht (6), die aus spaltenweise angeordneten Leiterbahnen besteht;
- Abstandshalter (4), die zwischen der oberen Schicht und der unteren Schicht so positioniert sind, dass sie die obere Schicht (3) und die untere Schicht (6) voneinander trennen;
wobei der Sensor ferner zumindest eine Zwischenschicht (5) aufweist, die zwischen den Abstandshaltern einerseits und zumindest der einen Schicht aus oberer Leiterschicht und unterer Leiterschicht andererseits positioniert ist; wobei die untere Schicht (6) einen linearen Widerstand hat und die obere Schicht (3) einen linearen Widerstand hat,
**dadurch gekennzeichnet, dass**
die Zwischenschicht (5) eine Widerstandsschicht ist und einen vertikalen Widerstand hat
und der vertikale Widerstand der Zwischenschicht (5) höher ist als der lineare Widerstand der unteren Schicht (6) und der lineare Widerstand der oberen Schicht (3).

2. Mehrpunktsensor nach Anspruch 1, wobei zumindest eine von der oberen Schicht und der unteren Schicht transparent ist.

3. Mehrpunktsensor nach Anspruch 2, wobei der Mehrpunktsensor aus transparenten Schichten gebildet ist, so dass er transparent ist.

4. Mehrpunktsensor nach einem der vorangehenden Ansprüche, wobei der vertikale Widerstand der Zwischenschicht (5) hundert Mal höher ist als der vertikale Widerstand der unteren Schicht und der oberen Schicht.

5. Mehrpunktsensor nach einem der vorangehenden Ansprüche, wobei die Zeilen der oberen Leiterschicht (3) und die Spalten der unteren Leiterschicht (6) eine Matrix mit quadratischen Zellen bilden.

6. Mehrpunktsensor nach dem vorangehenden Anspruch, wobei die quadratischen Zellen eine Seite mit 1,5 Millimeter aufweisen.

7. Mehrpunktsensor nach einem der vorangehenden Ansprüche, wobei der vertikale Widerstand der Zwischenschicht (5) einen Wert von 50 kΩ bis 200 kΩ hat.

8. Mehrpunktsensor nach einem der vorangehenden Ansprüche, wobei die Zwischenschicht (5) aus Silikon besteht.

9. Mehrpunktsensor nach einem der vorangehenden Ansprüche, wobei die obere Leiterschicht aus Zeilen von Indiumzinnoxid ITO besteht.

10. Mehrpunktsensor nach einem der vorangehenden Ansprüche, wobei die untere Leiterschicht aus Spalten von Indiumzinnoxid ITO besteht.

11. Mehrpunktsensor nach einem der vorangehenden Ansprüche, wobei die obere Leiterschicht unter einer Schicht (2) aus Polyethylenterephthalat PET liegt.

12. Mehrpunktsensor nach einem der vorangehenden Ansprüche, wobei die untere Leiterschicht über einer Glasschicht (7) liegt.

13. Mehrpunktsensor nach einem der vorangehenden Ansprüche, wobei die Zwischenschicht transparent ist.

14. Mehrpunktsensor nach einem der vorangehenden Ansprüche, wobei die Zwischenschicht eine deutlich höhere Impedanz als die Impedanz des Leitermaterials der oberen und unteren Schichten aufweist.
